# EUROPEAN PATENT SPECIFICATION

(11) **EP 3 208 017 B1**
(45) Date of publication and mention of the grant of the patent: **09.12.2026**
(21) Application number: 16195079.5
(22) Date of filing: 21.10.2016
(51) Int. Cl.: B23B 35/00, B23B 39/16, B23B 39/22, B23B 39/24, B23C 1/08

(54) **METHODS OF FORMING HOLES IN A WORKPIECE**
VERFAHREN ZUR HERSTELLUNG VON LÖCHERN IN WERKSTÜCKEN UND ENTSPRECHENDE SYSTEME
PROCÉDÉS DE FORMATION DE TROUS DANS UNE PIÈCE À USINER ET SYSTÈMES ASSOCIÉS

(30) Priority: 17.02.2016 US 201615045840
(43) Date of publication of application: 23.08.2017
(73) Proprietor: The Boeing Company, Arlington, VA 22202 (US)
(72) Inventor: HENRY, Donald E., Chicago, IL Illinois 60606-1596 (US); HESS, Frank P., Chicago, IL Illinois 60606-1596 (US); THOMPSON, Brian A., Chicago, IL Illinois 60606-1596 (US)
(74) Representative: Arnold & Siedsma

(56) References cited:
- EP-A2- 0 661 124
- WO-A1-97/10914
- DE-A1- 102011 122 539
- DE-A1- 102013 224 314
- GB-A- 2 498 099
- US-A- 2 974 548
- US-A- 3 739 461
- US-B1- 6 665 580

## Description

### FIELD

This disclosure relates generally to forming holes in workpieces, and more particularly to forming holes in workpieces having a multi-layer construction.

### BACKGROUND

Drilling holes in workpieces having a multi-layer construction can have unintended consequences. For example, when drilling a hole through a workpiece having a multi-layer construction with a cutter, as the cutter exits the workpiece to complete the hole, some delamination of the layers of the workpiece adjacent the hole can occur. Delamination of layers of a workpiece can weaken the workpiece and destabilize the coupling of fasteners with the hole.

Patent document US 6 665 580 B1, according to its abstract, states a method and an apparatus for monitoring the useful life of machine tools. A controller continuously monitors the amount of time a particular tool has been used as well as the materials the tool has been used to machine. A useful lifetime of the tool is estimated based on the characteristics of the tool. When the amount of time the tool has been used, adjusted based on the materials used, reaches the useful life span of the tool, the controller directs the machine to remove the tool from service and retrieve a duplicate tool for further machine operations.

Patent document DE 10 2011 122539 A1, according to its abstract, states a method for producing a bore in a workpiece, in which a pilot bore with a diameter is first produced using a drilling tool, which is then enlarged to a desired final diameter using a cutting tool designed for material-removing fine machining of the pilot bore. The cutting tool has a cutting edge in the region of a tool tip that runs at least approximately perpendicular to a central axis of the cutting tool and cutting edges that run along the circumference.

Patent document US 3 739 461 A, according to its abstract, states a method of enlarging or reaming a bore in a laminated workpiece which consists of selecting a straight fluted reaming tool whose diameter just exceeds that of the bore to be reamed. The reamer is held against rotation while being axially infed into the bore to, concomitantly, kerf the bore wall with its cutting edges. The reamer is then held against further axial movement and rotated to produce a finished bore which does not exhibit that workpiece smear or migration between adjacent laminae which is characteristic of bores formed in a laminated workpiece by infeeding a rotating tool. The document further states that a portion of a laminated workpiece is comprised of alternate copper and plastic laminae, and that the method involves a method of mechanically reaming a previously formed bore to remove migrated material. The reaming operation may be performed on the same set up used in forming the initial bore. Such a mechanically reamed hole will produce a precisely finished bore. The method involves involves a first step of infeeding a rotationally stationary, straight fluted reamer into a previously drilled hole with only the cutting edges thereof making substantial contact with the bore wall and that contact involving only such penetration of the bore wall as to just exceed the depth of migrated material present thereon. The second step involves axially restraining the reamer and rotating the same so that the cutting edges sweep a clean bore wall which bore wall has not been subject to an infeeding movement to migrate material therealong.

### SUMMARY

The present invention has been developed in response to the present state of the art, and in particular, in response to the shortcomings of conventional methods of drilling holes in workpieces, and associated drilling systems, that have not yet been fully solved by currently available techniques. Accordingly, the present invention has been developed to provide methods of forming holes in workpieces with a multi-layer construction that overcome at least some of the above-discussed shortcomings of prior art techniques.

The method of the presently claimed invention, according to claim 1, is configured to reduce the occurrence of delamination in workpieces with a multi-layer construction during the formation of holes in the workpieces. Generally, a chamfer is formed in an exit surface of the workpiece about a pilot hole preformed in the workpiece. A chamfer formed in an exit surface of the workpiece can be defined as a backside chamfer. When a cutter passes through the preformed hole from an entry surface to the exit surface of the workpiece, to enlarge the hole, the cutter exits the workpiece through the chamfer. The characteristics of the chamfer, such as the angled or beveled surfaces of the chamfer, reduce the tendency of the layers of the workpiece to delaminate as the cutter enlarges the hole and exits the workpiece. For workpieces where the exit surface may be inaccessible for forming a backside chamfer, such as when the exit surface is enclosed, some embodiments of the methods and systems of the present disclosure facilitate the formation of backside chamfers in exit surfaces that are inaccessible.

According to the presently claimed invention a method of forming a hole in a workpiece, having a first surface and a second surface opposite the first surface, is disclosed. The method includes forming a first hole, having a first diameter, in the workpiece by passing a first cutter through the workpiece from the first surface to the second surface. Additionally, the method includes forming a chamfer in the second surface of the workpiece concentric with the first hole using a second cutter. The chamfer has a second diameter larger than the first diameter. The method further includes, after forming the chamfer, forming a second hole, having a third diameter larger than the first diameter, in the workpiece concentric with the first hole by passing a third cutter through the workpiece from the first surface to the second surface.

Forming the chamfer in the second surface of the workpiece can include inserting the second cutter into the first hole from the first surface of the workpiece to the second surface of the workpiece. Forming the chamfer in the second surface of the workpiece can further include, with the second cutter inserted into the first hole, orbiting the second cutter about a central axis of the first hole while cutting the workpiece. The method may additionally include numerically controlling operation of the second cutter to form the chamfer in the second surface of the workpiece. The second cutter can include a dovetail cutter. The dovetail cutter has a maximum cutting diameter smaller than the first diameter of the first hole.

Forming the chamfer in the second surface of the workpiece can include positioning the second cutter on a second side of the workpiece adjacent the second surface, inserting a pilot portion of the second cutter into the first hole in a direction extending from the second side of the workpiece to a first side of the workpiece adjacent the first surface, and cutting the second surface of the workpiece with the second cutter and with the pilot portion of the second cutter inserted into the first hole. The method can further include preventing further insertion of the pilot portion of the second cutter into the first hole in the direction extending from the second side of the workpiece to the first side of the workpiece beyond a predetermined distance threshold. The predetermined distance threshold may correspond with a predetermined desired depth of the chamfer.

The first cutter can include one of a fluted drill bit or a first reamer and the third cutter includes a second reamer.

The second diameter of the chamfer can be a maximum diameter of the chamfer. Additionally, the second diameter of the chamfer can be smaller than the third diameter of the second hole.

The second diameter of the chamfer can be larger than the third diameter of the second hole.

The workpiece includes a plurality of interlaminated layers.

A method of forming a hole in a multi-layer composite workpiece is also disclosed. The multi-layer composite workpiece has a first surface and a second surface opposite the first surface. The method includes forming a pilot hole in the multi-layer composite workpiece. The pilot hole extends from the first surface to the second surface. Additionally, the method includes forming a chamfer, concentric with the pilot hole, in the second surface of the multi-layer composite workpiece. The method further includes, with the chamfer formed in the second surface of the multi-layer composite workpiece, enlarging the pilot hole.

The second surface of the multi-layer composite workpiece can be substantially enclosed such that the second surface is inaccessible from a second space directly adjacent the second surface of the multi-layer composite workpiece. Forming the chamfer in the second surface of the multi-layer composite workpiece can include inserting a second cutter into the pilot hole from a first space directly adjacent the first surface of the multi-layer composite workpiece, and orbiting the second cutter about a central axis of the pilot hole while cutting the second surface of the multi-layer composite workpiece. Enlarging the pilot hole can include passing a third cutter through the pilot hole and the chamfer from the first space directly adjacent the first surface of the multi-layer composite workpiece.

Forming the chamfer in the second surface of the multi-layer composite workpiece can include inserting a fourth cutter into the pilot hole from a second space directly adjacent the second surface of the multi-layer composite workpiece. Additionally, enlarging the pilot hole can include passing a third cutter through the pilot hole and the chamfer from a first space directly adjacent the first surface of the multi-layer composite workpiece.

Enlarging the pilot hole can include enlarging the pilot hole to a fourth diameter less than a maximum diameter of the chamfer.

Enlarging the pilot hole can comprise enlarging the pilot hole to a fourth diameter more than a maximum diameter of the chamfer.

A system for forming a hole in a workpiece is also disclosed. The workpieces has a first surface and a second surface opposite the first surface. The system includes a first cutter, configured to cut a cylindrical hole having a first diameter, a second cutter, configured to cut a chamfer, a third cutter, configured to cut a cylindrical hole having a second diameter that is larger than the first diameter, and a controller. The controller is configured to cause the first cutter to cut a first hole, having the first diameter, through the workpiece, to cause the second cutter to cut a chamfer in the second surface of the workpiece concentric with the first hole, and to cause the third cutter to enlarge the first hole from the first diameter to the second diameter by passing the third cutter through the workpiece in a direction extending from the first surface of the workpiece to the second surface of the workpiece.

The second cutter can have a maximum cutting diameter smaller than the first diameter. Additionally, the controller can cause the second cutter to cut the chamfer in the second surface of the workpiece by inserting the second cutter into the first hole in a direction extending from the first surface of the workpiece to the second surface of the workpiece and, with the second cutter inserted into the first hole, orbiting the second cutter about a central axis of the first hole while cutting the second surface of the workpiece.

The described features, structures, advantages, and/or characteristics of the subject matter of the presently claimed invention may be combined in any suitable manner in one or more embodiments and/or implementations. In the following description, numerous specific details are provided to impart a thorough understanding of embodiments of the subject matter of the present disclosure. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims.

The disclosure comprises the following illustrative examples that do not define the scope of protection but are useful for understanding the presently claimed invention. The scope of protection is determined solely by the appended claims.

In a first illustrative example, a method of forming a hole in a multi-layer composite workpiece, having a first surface and a second surface opposite the first surface, the method comprising: forming a pilot hole in the multi-layer composite workpiece, the pilot hole extending from the first surface to the second surface;
forming a chamfer, concentric with the pilot hole, in the second surface of the multi-layer composite workpiece; and with the chamfer formed in the second surface of the multi-layer composite workpiece, enlarging the pilot hole.

The second surface of the multi-layer composite workpiece may be substantially enclosed such that the second surface is inaccessible from a second space directly adjacent the second surface of the multi-layer composite workpiece, preferably wherein:
forming the chamfer in the second surface of the multi-layer composite workpiece comprises: inserting a second cutter into the pilot hole from a first space directly adjacent the first surface of the multi-layer composite workpiece; and orbiting the second cutter about a central axis of the pilot hole while cutting the second surface of the multi-layer composite workpiece; and enlarging the pilot hole comprises passing a third cutter through the pilot hole and the chamfer from the first space directly adjacent the first surface of the multi-layer composite workpiece.

Forming the chamfer in the second surface of the multi-layer composite workpiece may comprise inserting a fourth cutter into the pilot hole from a second space directly adjacent the second surface of the multi-layer composite workpiece; and
enlarging the pilot hole comprises passing a third cutter through the pilot hole and the chamfer from a first space directly adjacent the first surface of the multi-layer composite workpiece.

Enlarging the pilot hole may comprise enlarging the pilot hole to a fourth diameter less than a maximum diameter of the chamfer.

Enlarging the pilot hole may comprise enlarging the pilot hole to a fourth diameter more than a maximum diameter of the chamfer.

In a second illustrative example, a system is provided for forming a hole in a workpiece, having a first surface and a second surface opposite the first surface, the system comprising:
a first cutter, configured to cut a cylindrical hole having a first diameter,
a second cutter, configured to cut a chamfer,
a third cutter, configured to cut a cylindrical hole having a second diameter that is larger tha the first diameter, and
a controller, configured to:
   cause the first cutter to cut a first hole, having the first diameter, through the workpiece,
   cause the second cutter to cut a chamfer in the second surface of the workpiece concentric with the first hole, and
   cause the third cutter to enlarge the first hole from the first diameter to the second diameter by passing the third cutter through the workpiece in a direction extending from the first surface of the workpiece to the second surface of the workpiece.

The second cutter may have a maximum cutting diameter smaller than the first diameter, and the controller may cause the second cutter to cut the chamfer in the second surface of the workpiece by:
inserting the second cutter into the first hole in a direction extending from the first surface of the workpiece to the second surface of the workpiece, and
with the second cutter inserted into the first hole, orbiting the second cutter about a central axis of the first hole while cutting the second surface of the workpiece.

In a third illustrative example, the use of a system according to the second illustrative example in a method of the first illustrative example is foreseen.

### BRIEF DESCRIPTION OF THE DRAWINGS

In order that the advantages of the subject matter may be more readily understood, a more particular description described above of the present invention will be rendered by reference to the appended drawings.
Figure 1 is a schematic block diagram of a system for forming a hole in a workpiece.
Figure 2 is a partial cross-sectional side elevation view of a first cutter in position to form a first hole in a workpiece.
Figure 3 is a cross-sectional side elevation view of a first hole formed in the workpiece by the first cutter of Figure 2.
Figure 4 is a partial cross-sectional side elevation view of a second cutter inserted into the first hole formed in the workpiece.
Figure 5 is a partial cross-sectional side elevation view of the second cutter forming a chamfer in the workpiece.
Figure 6 is a cross-sectional side elevation view of the first hole and a chamfer formed in the workpiece by the second cutter of Figure 5.
Figure 7 is a partial cross-sectional side elevation view of a third cutter with a pilot portion inserted into the first hole formed in the workpiece.
Figure 8 is a partial cross-sectional side elevation view of the third cutter enlarging the first hole to form a second hole in the workpiece.
Figure 9 is a cross-sectional side elevation view of the second hole formed in the workpiece by the third cutter of Figure 8.
Figure 10 is a partial cross-sectional side elevation view of a third cutter enlarging the first hole to form a second hole in the workpiece.
Figure 11 is a cross-sectional side elevation view of the second hole formed in the workpiece by the third cutter of Figure 10.
Figure 12 is a partial cross-sectional side elevation view of a fourth cutter forming a chamfer in the workpiece.
Figure 13 is a schematic flow chart diagram illustrating a method of forming a hole in a workpiece.

### DETAILED DESCRIPTION

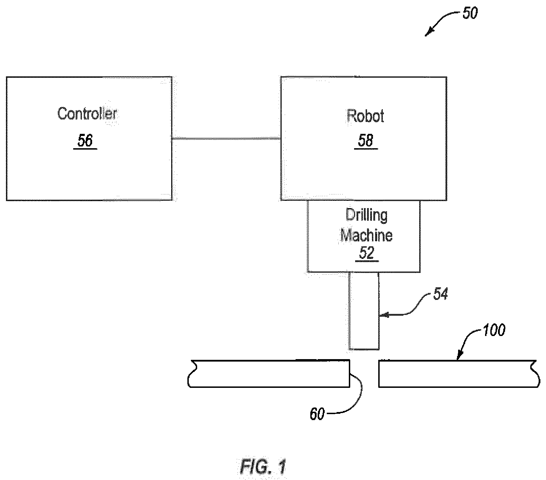

Referring to Figure 1, a system 50 for forming a hole 60 in a workpiece 100 is shown schematically. Generally, the system 50 includes a drilling machine 52, a cutter 54, a controller 56, and a robot 58. The cutter is rotatably coupled to the drilling machine 52, which is configured to rotate the cutter 54 about a central axis. Although not shown, the drilling machine 52 may include a spindle or motor configured to rotatably drive the cutter 54, which can be co-rotatably coupled with the motor via a chuck. The spindle or motor can include any of various types of motors, such as electric motors, electromagnetic motors, pneumatic motors, hydraulic motors, and the like. As the cutter 54 is rotated, the drilling machine 52 is moved relative to the workpiece 100, such as along a feed axis parallel to the central axis of the cutter 54 or a feed axis perpendicular to the central axis of the cutter 54, to pass the cutter 54, at least partially, through the workpiece 100 to form the hole 60 in the workpiece. As defined herein, a hole is a through-hole that extends entirely through the workpiece and has an entry opening on a first surface (e.g., entry surface) of the workpiece 100 and an exit opening on a second surface (e.g., exit surface) of the workpiece, opposing the first surface. The drilling machine 52 can be a punching machine and the cutter 54 can be a punch tool that is punched through the workpiece by the punching machine to form the hole in the workpiece. Accordingly, as used herein, a cutter can be a rotatable drill bit or a non-rotatable punch tool, and forming a hole in a workpiece can be done by drilling the workpiece with a cutter or punching the workpiece with a cutter.

The controller 56, or control module, is operably coupled with the drilling machine 42 to numerically control operation of the drilling machine 42. For example, the controller 56 may include programmable logic that causes commands and power to be transmitted to the drilling machine 52 to control the operating characteristics of the drilling machine 42 and the cutter 54. The controller 56 can transmit commands and power to the drilling machine 42 to achieve a desired rotational speed of the cutter 54. The controller 56 can vary the commands and power to vary the rotational speed of the cutter 54, such as in response to the type of cutter being used, the type of material being cut, and/or the type of cut being made to the workpiece.

Additionally, the controller 56 may be configured to numerically control movement of the drilling machine 42 and cutter 54 relative to the workpiece 100 via a robot 58. Although not shown, the robot 58 may include an arm and an end effector, to which the drilling machine 52 is fixed. The programmable logic of the controller 56 is configurable to command the robot 58 to move the drilling machine 52, relative to the workpiece 100, as necessary to form the hole 60 in the workpiece 100. The robot 58 can be configured to move the drilling machine 52 and cutter 54 along any number of feed axes to form holes in the workpiece having any number of shapes and sizes. Moreover, the robot 58 may be configured to position the drilling machine 52 and cutter 54 on opposing sides or surfaces of the workpiece 100 to approach the workpiece 100, in a hole-forming operation, from either surface of the workpiece 100.

The cutter 54 of the system 50 can represent any one of multiple cutters of the system 50. For example, the system can include multiple cutters 54 that are interchangeably coupleable with the drilling machine 52 to cut the workpiece 100 in different ways during a hole-forming operation. Examples of the multiple cutters 54 and associated steps executed during a hole-forming operation are described in more detail below. In other words, the system 50 can include any of the cutters described herein and perform any of the hole-forming steps described herein to form a hole in a workpiece.

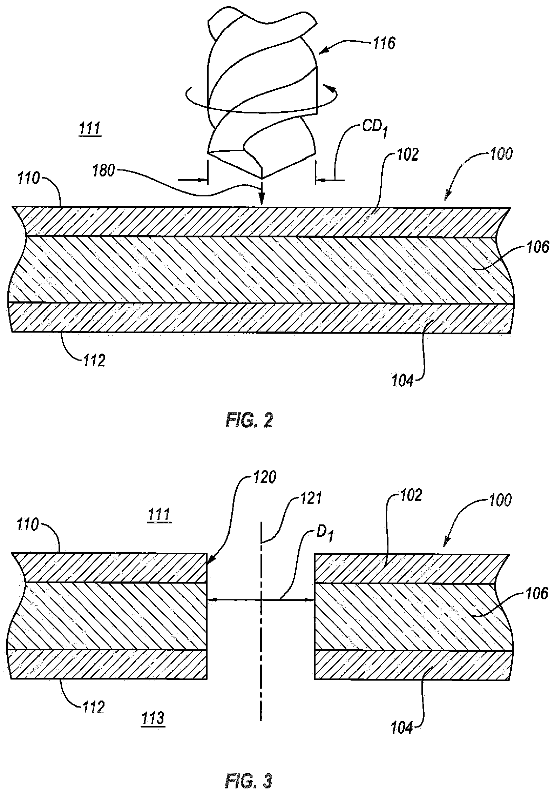

Referring now to Figure 2, a first cutter 116 is shown positioned to form a hole in the workpiece 100. The workpiece 100 includes a first surface 110 and a second surface 112, opposing the first surface 110. A thickness of the workpiece 100 is defined between the first surface 110 and the second surface 112. Although not necessary, the workpiece 100 can have a thickness that is relatively smaller than a length or width of the workpiece 100, such that the workpiece 100 formed a thin-walled panel. Although the workpiece 100 is shown to have first and second surfaces 110, 112 that are flat, in other embodiments, the workpiece 100 may be contoured, such that the first and second surfaces 110, 112 are non-flat, such as round, curved, bent, jagged, or otherwise. The workpiece 100 may form a portion of an overall structure, such as a rotor blade of a helicopter or a body of an airplane.

During manufacturing of the structure, a first space 111 is defined directly adjacent the first surface 110 and a second space 113 is defined directly adjacent the second surface 113. In other words, the workpiece 100 divides the first space 111 from the second space 113. Depending on the shape of the structure, the first space 111 may be an open or accessible space for users to access the first surface 110 from the first space 111. Likewise, such as for flat-paneled structures, the second space 113 may be an open or accessible space for users to access the second surface 112 from the second space 113. However, for certain structures, such as substantially circumferentially enclosed or tubular structures, like a rotor blade, the second space 113 may be an enclosed or inaccessible space, such that a user would be unable to access the second surface 112 from the second space 113 because it is facing an interior of the enclosed space.

The workpiece 100 can be made from any of various materials, such as metals, plastics, fiber-reinforced composites, and the like. Moreover, the workpiece 100 includes multiple layers of the same or different materials.

As shown in Figure 2, the workpiece 100 includes multiple layers of material or is multi-layered. The layers of the workpiece 100 can be laminated (e.g., interlaminated layers) or bonded together to form the workpiece. As an example, the workpiece 100, in the illustrated embodiments of Figures 2-12, includes a first layer 102, a second layer 104, and a third layer 106 interposed between the first and second layers 102, 104. The first layer 102, second layer 104, and third layer 106 are affixed, bonded, or laminated to each other to form a laminated, multi-layered workpiece. Although the workpiece 100, in the illustrated embodiments of Figures 2-12, includes three layers, in other embodiments, the workpiece 100 can include two or more than three layers.

Each of the first layer 102, second layer 104, and third layer 106 can be made from a fiber-reinforced composite material that includes fibers, such as carbon fibers, suspended within an epoxy matrix. Such workpieces can be defined as a multi-layer composite workpiece. The fibers of the fiber-reinforced composite materials may be unidirectional, with the direction of the fibers of at least two of the first layer 102, second layer 104, and third layer 106 being different. The unidirectional fibers of the first layer 102 can be oriented in a direction different than the unidirectional fibers of the second layer 104 and third layer 106, and the unidirectional fibers of the second layer 104 are oriented in a direction different that the unidirectional fibers of the third layer 106. In one implementation, the third layer 106 is made from a non-composite material, such as a foam.

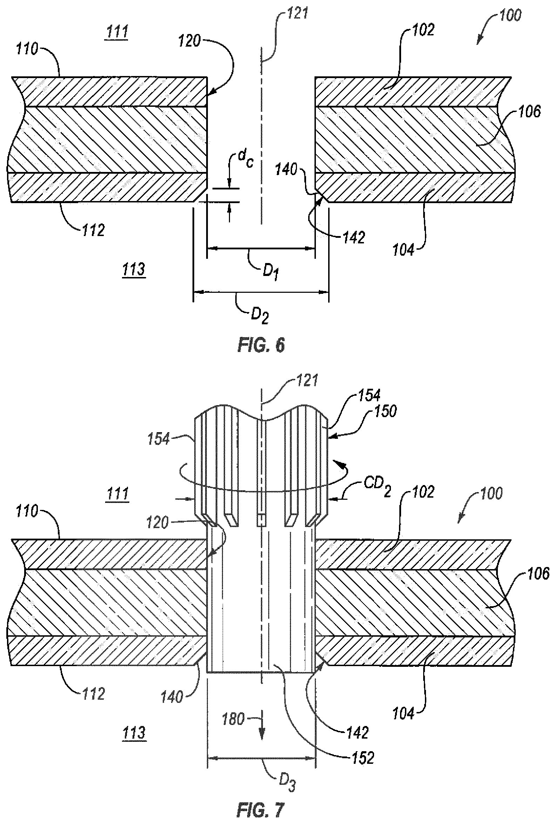

Referring still to Figure 2, the first cutter 116 can be any of various cutters (e.g., drill bits) configured to cut holes, of any of various shapes and sizes, in materials. In one implementation, the first cutter 116 is a twist or fluted drill bit with a relatively high flute twist rate. Alternatively, the first cutter 116 can be a fluted reamer with a relatively low twist rate or a non-fluted reamer (see, e.g., Figure 7). The first cutter 116 can be configured to cut a first hole 120 having a first diameter D₁ that is constant along a central axis 121 of the first hole 120 (see, e.g., Figure 3). In other words, the first hole 120 is a substantially cylindrical hole with parallel sidewalls. To form (e.g., cut) the first hole 120 with the first diameter D₁, the first cutter 116 has a first cutting diameter CD₁ approximately equal to, or slightly smaller than, the first diameter D₁ of the first hole 120. The first hole 120 is configured to act as a pilot hole for further working of the workpiece.

While rotating about its central axis, as indicated by a rotational direction arrow in Figure 2, the first cutter 116 is fed from the first space 111 in a first feed direction 180, parallel to the central axis 121 of the first hole 120 to be formed and, in some implementations, perpendicular to the first surface 110 of the workpiece 100, to pass through the workpiece 100. As the first cutter 116 rotates and passes through the workpiece 100, the first cutter 116 cuts away the material of the workpiece 100 to form the first hole 120, as shown in Figure 3. In one implementation, a portion of the first cutter 116 extends through and at least partially beyond the second surface 112 of the workpiece 100, such that the first hole 120 extends entirely through the workpiece 100 from the first surface 110 to the second surface 112.

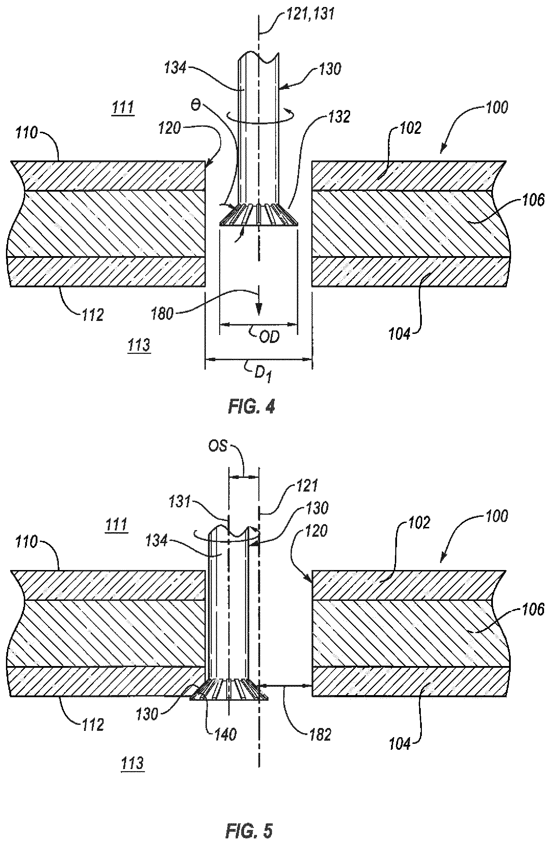

In Figures 4 and 5, the second surface 112 of the workpiece 100 may be inaccessible from the second space 113 as defined above (although the same embodiment can be applied when the second surface 112 of the workpiece 100 is accessible from the second space 113). Accordingly, the workpiece 100 cannot be approached from the second space 113 to form a chamfer 142 (see, e.g., Figure 6) in the second surface 112 of the workpiece 100. Therefore, a second cutter 130, approaching the workpiece 100 from the first space 111, is used to form the chamfer 142 in the second surface 112. The second cutter 130 can be any of various cutters configured to cut chamfers in materials. In one implementation, the second cutter 130 is a dovetail cutter specifically configured to cut chamfers in a backside of a workpiece. Therefore, the second cutter 130 can include one or more cutting edges 132 or blades that are angled at an angle θ relative to a plane perpendicular to the central axis 121 of the first hole 120 and a central axis 131 of the second cutter 130. Moreover, the second cutter 130 is configured such that the cutting edges 132 face back towards a shank 134 of the second cutter 130. The cutting edges 132 of the second cutter 130 define a maximum cutting diameter, which can be equal to a maximum outer diameter OD of the second cutter 130. The maximum outer diameter OD of the second cutter 130 is smaller than the first diameter D₁ of the first hole 120.

Referring to Figure 4, with the second space 113 being inaccessible, the second cutter 130 is fed from the first space 111 in the first feed direction 180 into and, and at least partially through, the first hole 120. Generally, the second cutter 130 is fed through the first hole 120 until the second cutter 130 reaches a desired cutting position relative to the second surface 112 of the workpiece 100. The desired cutting position can be any position in which at least some portion of the cutting edges 132 of the second cutter 130 are laterally adjacent the second surface 112, or extend beyond the second surface 112 in the first feed direction 180. Because the maximum outer diameter OD of the second cutter 130 is smaller than the first diameter D₁ of the first hole 120, the second cutter 130 can be inserted into and fed along the first hole 120 without the second cutter 130 impacting the workpiece 100. For example, the second cutter 130 can be fed through the first hole 120 in the first feed direction 180 with the central axis 131 of the second cutter 130 being concentric with the central axis 121 of the first hole 120 as shown in Figure 2. As used herein, a central axis of an object is a longitudinal symmetry axis of the object. While the second cutter 130 is fed through the first hole 120, the second cutter 130 need not be rotating, but can be rotating.

After the second cutter 130 is fed into the desired cutting position, the second cutter 130 is rotated about its central axis 131 (if not already rotating) as indicated by rotational direction arrow in Figure 5. Referring still to Figure 5, the second cutter 130 is then moved laterally as indicated by directional arrows 182 until cutting edges 132 pass through the workpiece 100 along the second surface 112 of the workpiece 100 to cut away the material to form the chamfer 142. Generally, the chamfer 142 is formed by cutting an angled surface 140 of a desired depth into the second surface 112 of the workpiece 100 concentrically about the central axis 121 of the first hole 120. The angle of the angled surface 140 corresponds with the angle of the cutting edges 132 of the second cutter 130. The angled surface 140 faces away from the shank 134 of the second cutter 130 when the second cutter 130 is positioned within the first hole 120 as shown.

When the maximum cutting diameter is smaller than the first diameter D₁ of the first hole 120, the chamfer 142 is formed by the second cutter 130 using orbital drilling techniques. Generally, orbital drilling techniques include offsetting the central axis 131 of the second cutter 130 from the central axis 121 of the first hole 120 by an offset OS, associated with a position of the second cutter 130 that cuts the angled surface 140 to a desired depth. Then, while the second cutter 130 is rotating about its central axis 131 to cut material from the second surface 112, orbiting the second cutter 130 and the central axis 131 about the central axis 121 of the first hole 120. In this manner, the chamfer 142 concentric with the first hole 120 and having a desired depth d_{C} is formed in the second surface 112 of the workpiece 100.

Referring to Figure 6, the chamfer 142 has an increasing diameter in the first feed direction 180 from a minimum diameter equal to the diameter D₁ of the first hole 120 to a maximum diameter D₂ flush or coincident with the second surface 112 of the workpiece 100. Because, the diameter of the chamfer 142 is larger than the diameter D₁ of the first hole 120 at all points along the central axis 121, excluding the minimum diameter, the chamfer 142 is defined to have a diameter that is larger than the diameter D₁ of the first hole 120. Further, although the chamfer 142 is shown to be formed in only the second layer 104 of the workpiece 100, in some embodiments, the chamfer 142 is formed in multiple layers of the workpiece 100.

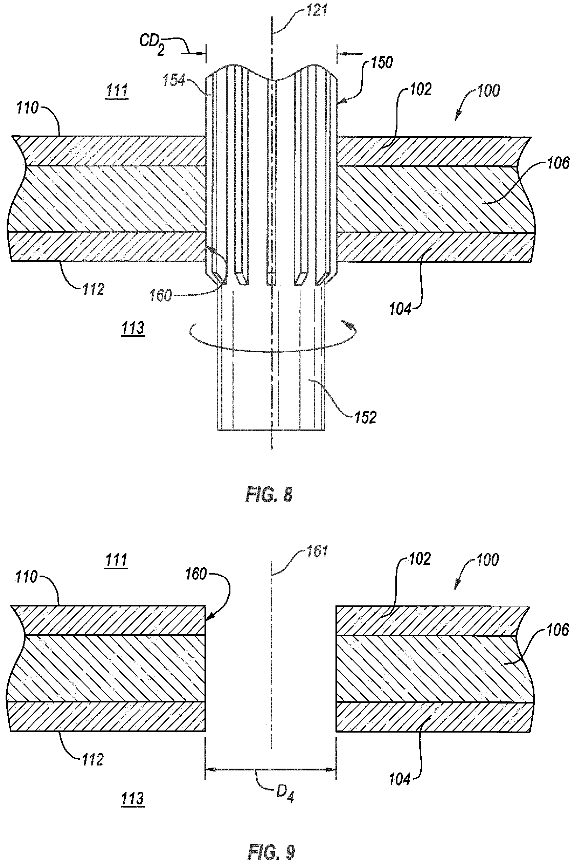

As shown in Figure 7, after forming the chamfer 142 in the second surface 112 of the workpiece 100, a third cutter 150 is used to form a second hole 160 by enlarging the first hole 120. The third cutter 150 can be any of various cutters configured to enlarge previously cut holes. The third cutter 150 can be a reamer, such as a drill bit with a relatively low twist rate or a non-fluted drill bit. For example, as illustrated, the third cutter 150 is a non-fluted drill bit with a plurality of parallel cutting blades 154 positioned circumferentially about a central shank. Each cutting blade 154 has a cutting edge configured to cut material as the third cutter 150 is rotated. The cutting blades 154 define a second cutting diameter CD₂. The third cutter 150 can be configured to cut a second hole 160 (see, e.g., Figures 8 and 9) having a fourth diameter D₄ that is constant along a central axis 161 of the second hole 160. In other words, the second hole 160 is a substantially cylindrical hole with parallel sidewalls. To form (e.g., cut) the second hole 160 with the fourth diameter D₄, the second cutting diameter D₂ of the third cutter 150 is approximately equal to, or slightly smaller than, the fourth diameter D₄ of the second hole 160.

While rotating about its central axis, as indicated by a rotational direction arrow in Figures 7 and 8, the third cutter 150 is fed from the first space 111 in the first feed direction 180 concentric with the central axis 121 of the first hole 120 to pass through the workpiece 100. As the third cutter 150 rotates and passes through the workpiece 100, the third cutter 150 cuts away material of the workpiece 100 circumferentially surrounding the first hole 120 to effectively enlarge the first hole 120 by forming the second hole 160, concentric with the first hole 120, having the fourth diameter D₄ larger than the first diameter D₁. In one implementation, a portion of the third cutter 150 extends through and at least partially beyond the second surface 112 of the workpiece 100, such that the second hole 160 extends entirely through the workpiece 100 from the first surface 110 to the second surface 112.

To facilitate concentricity between a central axis of the third cutter 150 and the central axis 121 of the first hole 120 as the third cutter 150 is fed through the first hole 120 to form the second hole 160, the third cutter 150 can include a pilot portion 152. The pilot portion 152 is configured to complement the first hole 120 or form a clearance fit (e.g., allow relative rotation) with the first hole 120. Accordingly, the pilot portion 152 of the third cutter 150 is substantially cylindrically shaped and has a third diameter D₃ substantially equal to the first diameter D₁ of the first hole 120. Generally, engagement between pilot portion 152 of third cutter 150 and the first hole 120 ensures a proper concentric orientation of the third cutter 150 relative to the first hole 120 before the third cutter 150 starts to cut material away from the workpiece 100.

In Figures 7-9, the second cutting diameter CD₂ of the third cutter 150, and thus the fourth diameter D₄ of the second hole 160, is larger than the maximum diameter D₂ of the chamfer 142 such that no portion of the chamfer 142 remains after forming the second hole 160. For a given final hole diameter (e.g., 1.91 cm (0.75 inches)), a ratio between the maximum diameter D₂ of the chamfer 142 and the first diameter D₁ of the first hole 120 can be between about 1 and about 1.2, a ratio between the maximum diameter D₂ of the chamfer 142 and the fourth diameter D₄ of the second hole 160 can be between about 0.99 and about 1, and a ratio between the first diameter D₁ of the first hole 120 and the fourth diameter D₄ of the second hole 160 can be greater than about 0.83 and less than about 1.

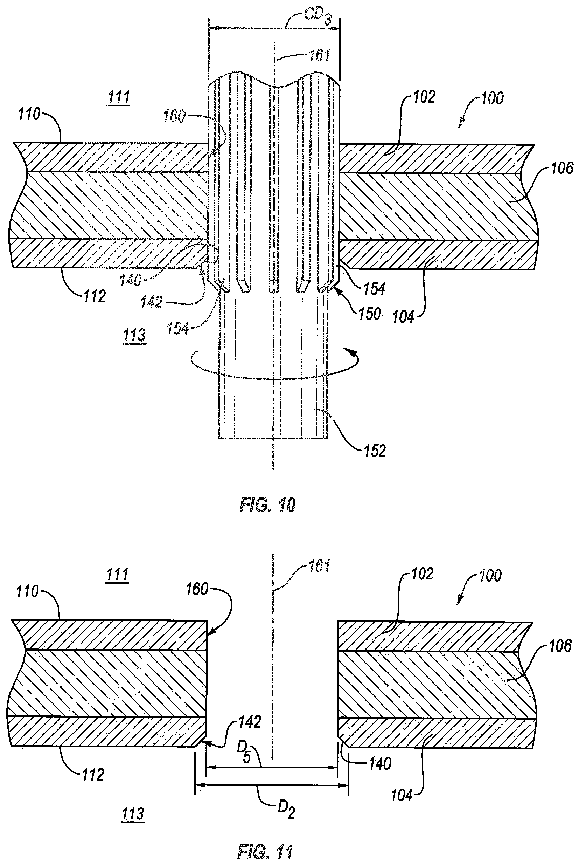

In Figures 10 and 11, the third cutter 150 can have a third cutting diameter CD₃, smaller than the second cutting diameter CD₂ and smaller than the maximum diameter D₂ of the chamfer 142, such that a portion of the chamfer 142 remains after forming the second hole 160 with a fifth diameter D₅ substantially equal to the third cutting diameter CD₃. In Figures 10 and 11, and for a given final hole diameter (e.g., 1.91 cm (0.75 inches))a ratio between the maximum diameter D₂ of the chamfer 142 and the first diameter D₁ of the first hole 120 can be between about 1 and about 1.2, a ratio between the maximum diameter D₂ of the chamfer 142 and the fifth diameter D₅ of the second hole 160 can be between about 1.01 and about 1, and a ratio between the first diameter D₁ of the first hole 120 and the fifth diameter D₅ of the second hole 160 can be greater than about 0.83 and less than about 1.

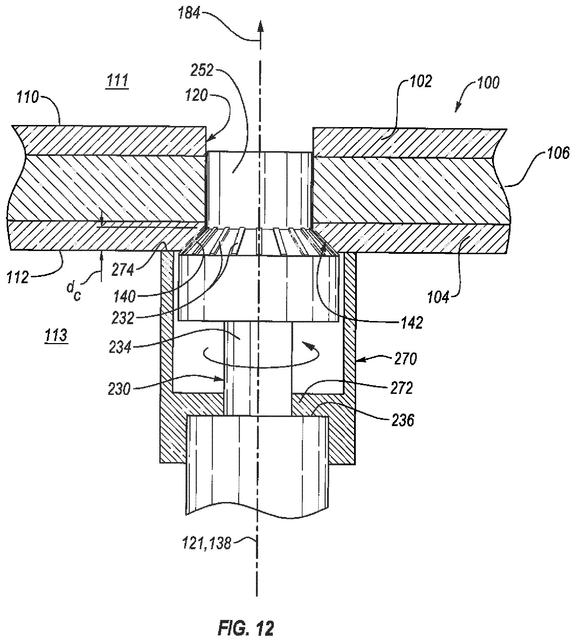

While the embodiment of Figures 4 and 5 is specifically configured to accommodate structures where the second surface 112 of the workpiece 100 is inaccessible from the second space 113, the embodiment of Figure 12 is associated with a structure where the second surface 112 of the workpiece 100 is accessible from the second space 113. In other words, in the embodiment of Figure 12, the workpiece 100 can be approached from the second space 113 to form the chamfer 142 in the second surface 112 of the workpiece 100. Therefore, a fourth cutter 230, approaching the second surface 112 workpiece 100 from the second space 113, is used to form the chamfer 142 in the second surface 112.

The fourth cutter 230 can be any of various cutters configured to cut chamfers in materials. In one implementation, the fourth cutter 230 is a reverse dovetail cutter. The fourth cutter 230 includes one or more cutting edges 232 or blades that are angled at an angle relative to a plane perpendicular to the central axis 121 of the first hole 120 and a central axis 131 of the second cutter 130. Contrary to the second cutter 130, the fourth cutter 230 is configured such that the cutting edges 232 face away from a shank 234 of the fourth cutter 230. The cutting edges 232 of the fourth cutter 230 also define a maximum cutting diameter, which can be equal to a maximum outer diameter OD of the fourth cutter 230. The maximum cutting diameter of the fourth cutter 230 corresponds with a maximum diameter of the chamfer 142 that can be formed by the fourth cutter 230. Moreover, in the illustrated embodiment, the maximum outer diameter OD of the fourth cutter 230 is larger than the first diameter D₁ of the first hole 120. However, in some embodiments, the maximum outer diameter OD of the fourth cutter 230 can be smaller than the first diameter D₁ of the first hole 120, and the chamfer 142 can be cut using orbital drilling techniques as described above.

Referring still to Figure 12, with the second surface 112 of the workpiece 100 being accessible via the second space 113, the fourth cutter 230 is rotated, as indicated by rotational direction arrow, and fed from the second space 113 in a second feed direction 184, opposite the first feed direction 180, into the second surface 112 of the workpiece 100 to form the chamfer 142 in the second surface 112 concentric with the first hole 120. Generally, the fourth cutter 230 is fed into the second surface 112 of the workpiece 100 until the fourth cutter 230 reaches a desired depth into the workpiece 100 associated with a desired depth d_{C} of the chamfer 142, which can be predetermined. In one embodiment, movement of the fourth cutter 230 is numerically controlled to stop feeding the fourth cutter 230 into the workpiece 100 once the fourth cutter 230 reaches a predetermined distance threshold and the desired depth d_{C} of the chamfer 142 is reached. However, in other embodiments, movement of the fourth cutter 230 is manually controlled.

When movement of the fourth cutter 230 is manually controlled, a micro-stop 270 can be used ensure the fourth cutter 230 does not exceed the desired depth d_{C} of the chamfer 142 as it is being manually fed into the workpiece 100 in the second feed direction 184. The micro-stop 270 can be any of various micro-stops known in the art. For example, the micro-stop 270 is movably coupled with the fourth cutter 230 to allow the fourth cutter 230 to move through the micro-stop 270 as the fourth cutter 230 is being fed in the second feed direction 184. However, the micro-stop 270 includes a ridge 272 or stop that is configured to engage a shoulder 236 of the fourth cutter 230 to prevent further movement of the fourth cutter 230 relative to the micro-stop 270 in the second feed direction 184 when the desired depth d_{C} of the chamfer 142 is reached. The micro-stop 270 includes an end 274 designed to abut the second surface 112 of the workpiece 100 around the first hole 120 while the chamfer 142 is being formed, such that engagement with the ridge 272 by the shoulder 236 not only prevents further movement of the fourth cutter 230 relative to the micro-stop 270 in the second feed direction 184, but also prevents further movement of the fourth cutter 230 relative to the workpiece 100 in the second feed direction 184. A distance between the ridge 272 and an end of the micro-stop 270 abutting the second surface 112 is set to correspond with the desired depth d_{C} of the chamfer 142. In certain implementations, the distance between the ridge 272 and the end 274 of the micro-stop 270 abutting the second surface 112 is adjustable to accommodate different desired depths d_{C} of the chamfer 142.

Because orbital drilling techniques are not necessary when the second surface 112 of the workpiece 100 is accessible via the second space 113, as mentioned above, the chamfer 142 can be manually formed in the second surface 112 with the fourth cutter 230. To facilitate concentricity between a central axis 238 of the fourth cutter 230 and the central axis 121 of the first hole 120 as the fourth cutter 230 forms the chamfer 142, the fourth cutter 230 may include a pilot portion 252. Similar to the pilot portion 152 of the third cutter 150, the pilot portion 252 of the fourth cutter 230 is configured to complement the first hole 120 or form a clearance fit with the first hole 120. Accordingly, the pilot portion 252 of the fourth cutter 230 is substantially cylindrically shaped and has a diameter substantially equal to the first diameter D₁ of the first hole 120. Generally, engagement between pilot portion 252 of fourth cutter 230 and the first hole 120 ensures a proper concentric orientation of the fourth cutter 230 relative to the first hole 120 before the fourth cutter 230 starts to cut material away from the workpiece 100 to form the chamfer 142.

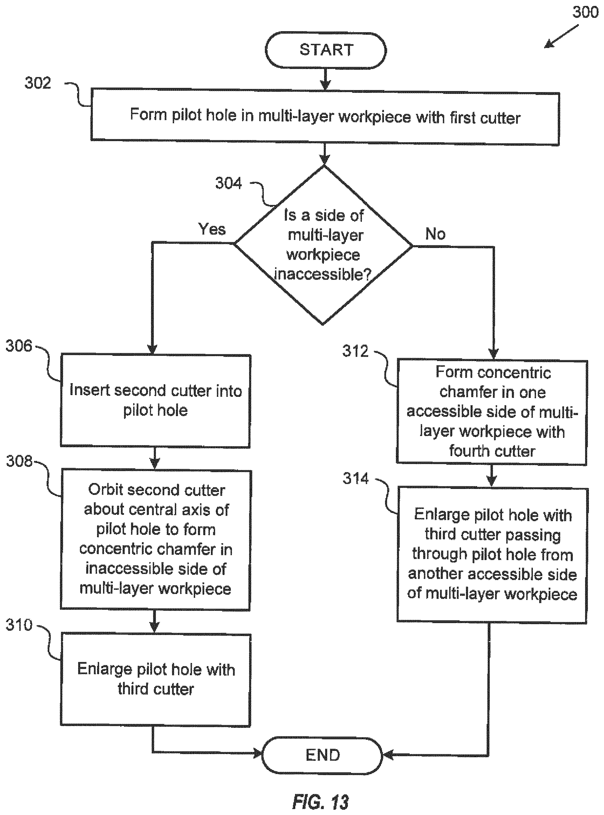

Referring now to Figure 13, a method 300 of forming a hole in a workpiece, such as with the system 50 can include any of the method steps described above. For example, the method 300 includes forming a pilot hole in a workpiece, such as a multi-layer workpiece, with a first cutter at 302. If a side of the workpiece is not accessible, as determined at 304, the method 300 includes inserting a second cutter into the pilot hole from an accessible side of the workpiece at 306, orbiting the second cutter about a central axis of the pilot hole to form a chamfer, concentric with the pilot hole, in the inaccessible side of the workpiece at 308, and enlarging the pilot hole with a third cutter, after forming the chamfer, from the accessible side of the workpiece at 310. However, if both sides of the workpiece are accessible, as determined at 304, the method 300 includes forming a chamfer, concentric with the pilot hole, in and from an accessible side of the workpiece with a fourth cutter at 312 and enlarging the pilot hole with the third cutter, after forming the chamfer, from another or different accessible side of the workpiece at 314.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

Some of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of computer readable program code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of computer readable program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the computer readable program code may be stored and/or propagated on in one or more computer readable medium(s).

The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The schematic flow chart diagrams included herein are generally set forth as logical flow chart diagrams. As such, the depicted order and labeled steps are indicative of one embodiment of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from the scope of the claims. The described embodiments are to be considered in all respects only as illustrative and not restrictive. All changes which come within the meaning of the claims are to be embraced within their scope.

## Claims

1. A method of forming a hole (60) in a workpiece (100), the workpiece (100) comprising a plurality of interlaminated layers and having a first surface (110) and a second surface (112) opposite the first surface (110), the method comprising:
forming a first hole (120), having a first diameter, in the workpiece (100) by passing a first cutter (116) through the workpiece (100) from the first surface (110) to the second surface (112);
forming a chamfer (142) in the second surface (112) of the workpiece (100) concentric with the first hole (120) using a second cutter (130), the chamfer (142) having a second diameter larger than the first diameter; and
after forming the chamfer (142), forming a second hole (160) having a third diameter larger than the first diameter, in the workpiece (100) concentric with the first hole (120) by passing a third cutter (150) through the workpiece (100) from the first surface (110) to the second surface (112).

2. The method of claim 1, wherein forming the chamfer (142) in the second surface (112) of the workpiece (100) comprises inserting the second cutter (130) into the first hole (120) from the first surface (110) of the workpiece (100) to the second surface (112) of the workpiece (100).

3. The method of claim 1 or 2, wherein forming the chamfer (142) in the second surface (112) of the workpiece (100) further comprises, with the second cutter (130) inserted into the first hole (120), orbiting the second cutter (130) about a central axis of the first hole (120) while cutting the workpiece (100).

4. The method of any of the claims 1-3, further comprising numerically controlling operation of the second cutter (130) to form the chamfer (142) in the second surface (112) of the workpiece (100).

5. The method of any of the preceding claims, wherein the second cutter (130) comprises a dovetail cutter.

6. The method of claim 5, wherein the dovetail cutter has a maximum cutting diameter smaller than the first diameter of the first hole (120).

7. The method of any preceding claim, wherein forming the chamfer (142) in the second surface (112) of the workpiece (100) comprises:
positioning the second cutter (130) on a second side of the workpiece adjacent the second surface (112);
inserting a pilot portion of the second cutter (130) into the first hole (120) in a direction extending from the second side of the workpiece (100) to a first side of the workpiece (100) adjacent the first surface (110); and
cutting the second surface (112) of the workpiece with the second cutter (130) and with the pilot portion of the second cutter (130) inserted into the first hole (120).

8. The method of claim 7, further comprising preventing further insertion of the pilot portion of the second cutter (130) into the first hole (120) in the direction extending from the second side of the workpiece (100) to the first side of the workpiece (100) beyond a predetermined distance threshold, the predetermined distance threshold corresponding with a predetermined desired depth of the chamfer (142).

9. The method of any preceding claim, wherein:
the first cutter (116) comprises a fluted drill bit and
the third cutter (150) comprises a second reamer.

10. The method of any of the preceding claims 1-8 wherein:
the first cutter (116) comprises a first reamer and
the third cutter (150) comprises a second reamer.

11. The method of any preceding claim, wherein:
the second diameter of the chamfer (142) is a maximum diameter of the chamfer (142); and
the second diameter of the chamfer (142) is smaller than the third diameter of the second hole (160).

12. The method of any of the preceding claims 1-10, wherein the second diameter of the chamfer (142) is larger than the third diameter of the second hole (160).

13. The method according to any of the preceding claims, wherein each interlaminated layer is made from a fiber-reinforced composite layer.

14. The method according to claim 13, wherein the fiber-reinforced composite layer includes fibers suspended in an epoxy matrix.

15. The method according to claim 14, wherein the fibers are carbon fibers.

## Patentansprüche

1. Verfahren zum Ausbilden eines Lochs (60) in einem Werkstück (100), wobei das Werkstück (100) eine Vielzahl von interlaminierten Schichten umfasst und eine erste Oberfläche (110) und eine zweite Oberfläche (112), die der ersten Oberfläche (110) gegenüberliegt, aufweist, das Verfahren umfassend:
Ausbilden eines ersten Lochs (120), das einen ersten Durchmesser aufweist, in dem Werkstück (100) durch ein Führen eines ersten Schneidwerkzeugs (116) durch das Werkstück (100) von der ersten Oberfläche (110) zu der zweiten Oberfläche (112);
Ausbilden einer Fase (142) in der zweiten Oberfläche (112) des Werkstücks (100) konzentrisch zu dem ersten Loch (120) unter Verwendung eines zweiten Schneidwerkzeugs (130), wobei die Fase (142) einen zweiten Durchmesser aufweist, der größer als der erste Durchmesser ist; und
nach dem Ausbilden der Fase (142), Ausbilden eines zweiten Lochs (160), das einen dritten Durchmesser aufweist, der größer als der erste Durchmesser ist, in dem Werkstück (100) konzentrisch zu dem ersten Loch (120) durch das Führen eines dritten Schneidwerkzeugs (150) durch das Werkstück (100) von der ersten Oberfläche (110) zu der zweiten Oberfläche (112).

2. Verfahren nach Anspruch 1, wobei das Ausbilden der Fase (142) in der zweiten Oberfläche (112) des Werkstücks (100) ein Einsetzen des zweiten Schneidwerkzeugs (130) in das erste Loch (120) von der ersten Oberfläche (110) des Werkstücks (100) zu der zweiten Oberfläche (112) des Werkstücks (100) umfasst.

3. Verfahren nach Anspruch 1 oder 2, wobei das Ausbilden der Fase (142) in der zweiten Oberfläche (112) des Werkstücks (100), wenn das zweite Schneidwerkzeug (130) in das erste Loch (120) eingesetzt ist, ferner das Umlaufenlassen des zweiten Schneidwerkzeugs (130) um eine Mittelachse des ersten Lochs (120) während eines Schneidens des Werkstücks (100) umfasst.

4. Verfahren nach einem der Ansprüche 1 bis 3, ferner umfassend ein numerisches Steuern eines Betriebs des zweiten Schneidwerkzeugs (130), um die Fase (142) in der zweiten Oberfläche (112) des Werkstücks (100) auszubilden.

5. Verfahren nach einem der vorstehenden Ansprüche, wobei das zweite Schneidwerkzeug (130) einen Schwalbenschwanzfräser umfasst.

6. Verfahren nach Anspruch 5, wobei der Schwalbenschwanzfräser einen maximalen Schneiddurchmesser aufweist, der kleiner als der erste Durchmesser des ersten Lochs (120) ist.

7. Verfahren nach einem der vorstehenden Ansprüche, wobei das Ausbilden der Fase (142) in der zweiten Oberfläche (112) des Werkstücks (100) umfasst:
Positionieren des zweiten Schneidwerkzeugs (130) an einer zweiten Seite des Werkstücks angrenzend an die zweite Oberfläche (112);
Einsetzen eines Pilotabschnitts des zweiten Schneidwerkzeugs (130) in das erste Loch (120) in einer Richtung, die sich von der zweiten Seite des Werkstücks (100) zu einer ersten Seite des Werkstücks (100) angrenzend an die erste Oberfläche (110) erstreckt; und
Schneiden der zweiten Oberfläche (112) des Werkstücks mit dem zweiten Schneidwerkzeug (130) und wobei der Pilotabschnitt des zweiten Schneidwerkzeugs (130) in das erste Loch (120) eingesetzt ist.

8. Verfahren nach Anspruch 7, ferner umfassend ein Verhindern des weiteren Einsetzens des Pilotabschnitts des zweiten Schneidwerkzeugs (130) in das erste Loch (120) in der Richtung, die sich von der zweiten Seite des Werkstücks (100) zu der ersten Seite des Werkstücks (100) erstreckt, über eine vorbestimmte Abstandsschwelle hinaus, wobei die vorbestimmte Abstandsschwelle einer vorbestimmten gewünschten Tiefe der Fase (142) entspricht.

9. Verfahren nach einem der vorstehenden Ansprüche, wobei:
das erste Schneidwerkzeug (116) einen gerillten Bohrer umfasst und
das dritte Schneidwerkzeug (150) eine zweite Reibahle umfasst.

10. Verfahren nach einem der Ansprüche 1 bis 8, wobei:
das erste Schneidwerkzeug (116) eine erste Reibahle umfasst und
das dritte Schneidwerkzeug (150) eine zweite Reibahle umfasst.

11. Verfahren nach einem der vorstehenden Ansprüche, wobei:
der zweite Durchmesser der Fase (142) ein maximaler Durchmesser der Fase (142) ist; und
der zweite Durchmesser der Fase (142) kleiner als der dritte Durchmesser des zweiten Lochs (160) ist.

12. Verfahren nach einem der vorstehenden Ansprüche 1 bis 10, wobei der zweite Durchmesser der Fase (142) größer als der dritte Durchmesser des zweiten Lochs (160) ist.

13. Verfahren nach einem der vorstehenden Ansprüche, wobei jede interlaminierte Schicht aus einer faserverstärkten Verbundschicht hergestellt ist.

14. Verfahren nach Anspruch 13, wobei die faserverstärkte Verbundschicht in einer Epoxidmatrix suspendierte Fasern einschließt.

15. Verfahren nach Anspruch 14, wobei die Fasern Carbonfasern sind.

## Revendications

1. Procédé de formation d'un trou (60) dans une pièce à usiner (100), la pièce à usiner (100) comprenant une pluralité de couches interstratifiées et ayant une première surface (110) et une seconde surface (112) opposée à la première surface (110), le procédé comprenant :
la formation d'un premier trou (120), ayant un premier diamètre, dans la pièce à usiner (100) en faisant passer une première fraise (116) à travers la pièce à usiner (100) de la première surface (110) à la seconde surface (112) ;
la formation d'un chanfrein (142) dans la seconde surface (112) de la pièce à usiner (100) concentrique avec le premier trou (120) à l'aide d'une deuxième fraise (130), le chanfrein (142) ayant un deuxième diamètre supérieur au premier diamètre ; et
après la formation du chanfrein (142), la formation d'un second trou (160) ayant un troisième diamètre supérieur au premier diamètre, dans la pièce à usiner (100) concentrique avec le premier trou (120) en faisant passer une troisième fraise (150) à travers la pièce à usiner (100) de la première surface (110) à la seconde surface (112).

2. Procédé selon la revendication 1, dans lequel la formation du chanfrein (142) dans la seconde surface (112) de la pièce à usiner (100) comprend l'insertion de la deuxième fraise (130) dans le premier trou (120) de la première surface (110) de la pièce à usiner (100) à la seconde surface (112) de la pièce à usiner (100).

3. Procédé selon la revendication 1 ou 2, dans lequel la formation du chanfrein (142) dans la seconde surface (112) de la pièce à usiner (100) comprend en outre, avec la deuxième fraise (130) insérée dans le premier trou (120), la mise en orbite de la deuxième fraise (130) autour d'un axe central du premier trou (120) tout en fraisant la pièce à usiner (100).

4. Procédé selon l'une quelconque des revendications 1 à 3, comprenant en outre la commande numérique d'un fonctionnement de la deuxième fraise (130) pour former le chanfrein (142) dans la seconde surface (112) de la pièce à usiner (100).

5. Procédé selon l'une quelconque des revendications précédentes, dans lequel la deuxième fraise (130) comprend une fraise conique à cône renversé.

6. Procédé selon la revendication 5, dans lequel la fraise conique à cône renversé a un diamètre de fraisage maximal inférieur au premier diamètre du premier trou (120).

7. Procédé selon l'une quelconque revendication précédente, dans lequel la formation du chanfrein (142) dans la seconde surface (112) de la pièce à usiner (100) comprend :
le positionnement de la deuxième fraise (130) sur un second côté de la pièce à usiner adjacent à la seconde surface (112) ;
l'insertion d'une partie pilote de la deuxième fraise (130) dans le premier trou (120) dans une direction s'étendant du second côté de la pièce à usiner (100) à un premier côté de la pièce à usiner (100) adjacent à la première surface (110) ; et
le fraisage de la seconde surface (112) de la pièce à usiner avec la deuxième fraise (130) et avec la partie pilote de la deuxième fraise (130) insérée dans le premier trou (120).

8. Procédé selon la revendication 7, comprenant en outre le fait d'empêcher une insertion supplémentaire de la partie pilote de la deuxième fraise (130) dans le premier trou (120) dans la direction s'étendant du second côté de la pièce à usiner (100) au premier côté de la pièce à usiner (100) au-delà d'un seuil de distance prédéterminé, le seuil de distance prédéterminé correspondant à une profondeur souhaitée prédéterminée du chanfrein (142).

9. Procédé selon l'une quelconque revendication précédente, dans lequel :
la première fraise (116) comprend une mèche de foret cannelée et
la troisième fraise (150) comprend un second alésoir.

10. Procédé selon l'une quelconque des revendications précédentes 1 à 8, dans lequel :
la première fraise (116) comprend un premier alésoir et
la troisième fraise (150) comprend un second alésoir.

11. Procédé selon l'une quelconque revendication précédente, dans lequel :
le deuxième diamètre du chanfrein (142) est un diamètre maximal du chanfrein (142) ; et
le deuxième diamètre du chanfrein (142) est inférieur au troisième diamètre du second trou (160).

12. Procédé selon l'une quelconque des revendications précédentes 1 à 10, dans lequel le deuxième diamètre du chanfrein (142) est supérieur au troisième diamètre du second trou (160).

13. Procédé selon l'une quelconque des revendications précédentes, dans lequel chaque couche interstratifiée est fabriquée à partir d'une couche composite renforcée par des fibres.

14. Procédé selon la revendication 13, dans lequel la couche composite renforcée par des fibres comporte des fibres en suspension dans une matrice époxy.

15. Procédé selon la revendication 14, dans lequel les fibres sont des fibres de carbone.
